# EUROPEAN PATENT SPECIFICATION

(11) **EP 0 370 318 B1**
(45) Date of publication and mention of the grant of the patent: **17.07.1996**
(21) Application number: 89120768.0
(22) Date of filing: 09.11.1989
(51) Int. Cl.: H01K 1/50

(54) **Fill for high temperature tungsten-halogen lamps**
Füllung für auf Hochtemperatur betriebene Wolfram-Halogenlampen
Remplissage pour des lampes tungstène-halogène fonctionnant à haute température

(30) Priority: 22.11.1988 US 274586
(43) Date of publication of application: 30.05.1990
(73) Proprietor: GENERAL ELECTRIC COMPANY, Schenectady, NY 12345 (US)
(72) Inventor: Yu, Thomas Huei-Chung, Richmond Heights Ohio 44143 (US); Holcomb, Richard H., Chagrin Falls Ohio 44022 (US)
(74) Representative: Pratt, Richard Wilson

(56) References cited:
- EP-A- 0 206 351
- EP-A- 0 239 005
- DD-A- 133 493
- DE-A- 3 603 141
- FR-A- 2 247 817
- US-A- 3 811 063

## Description

### BACKGROUND OF THE INVENTION

### Field of the Invention

This invention relates to a fill suitable for use with tungsten halogen lamps which operate at relatively high temperatures and lamps using same. More particularly, this invention relates to a tungsten halogen lamp which operates at a temperature of at least about 250°C and which comprises a hermetically sealed, light transmissive, vitreous envelope containing a tungsten filament, molybdenum and a fill, said fill comprising inert gas, hydrogen, phosphorus, chlorine and bromine.

### Background of the Disclosure

Tungsten halogen lamps which comprise a hermetically sealed vitreous, light transmissive envelope enclosing a tungsten filament and containing a fill comprising a halogen gas are well known to those skilled in the art. These lamps operate on a tungsten-halogen cycle which is a regenerative, continuous process in which a halogen containing tungsten compound is produced when the halide combines chemically with particles of tungsten evaporating from an incandescent tungsten filament. Subsequent thermal decomposition of these so formed halogen containing tungsten compounds at the filament returns the tungsten particles back to the filament. For the most part, one or more bromine compounds are used for the halide fill in such lamps along with an inert gas, such as argon. Phosphorus or phosphorus compounds which act as oxygen getters are also employed in the fill. Bromine compounds known to be useful for such fills include hydrogen bromide HBr, methyl bromide CH₃Br, dibromomethane CH₂Br₂ and bromoform CHBr₃. Thus, U.S. Patent 3,712,701 discloses the use of hydrogen bromide as well as these bromine containing single carbon atom hydrocarbon compounds. This patent also discloses the use of phosphonitrilic bromides. U.S. 4,629,935 discloses a fill consisting of a mixture of phosphine and methyl bromide wherein the mass ratio of the carbon to the phosphorus in the fill resulting from such compounds ranges from about 4/1 to about 1/1. It is also known that the use of carbon containing compounds in tungsten-halogen lamps can result in the tungsten filament becoming brittle due to the presence of the carbon in the lamp. This embrittlement becomes particularly significant in filaments made of fine tungsten wire having a diameter of less than 0.127 mm (.005 inches) and U.S. 4,629,936 suggests various ratios of phosphorus compounds to carbon containing compounds, along with the presence of yellow phosphorus in the lamp, as a possible solution to this problem. The example in this patent employed a mixture of yellow phosphorus, methyl bromide and phosphine, but the amounts of these materials used in the fill are not given. The preferred phosphorus to carbon mass ratio was said to be 8 to 1.

DD-A-133,493 discloses a halogen light bulb having a phosphorus containing getter and containing a fill of inert gas (e.g. Krypton) and a halogen containing gas. The getter in one example is phosphorous acid methyl ester dichloride in combination with dibromomethane. The purpose of the getter is to extend service life of the bulb and to reduce blackening of the bulb envelope.

U.S. 4,748,376 discloses that additional problems occur with tungsten halogen lamps when the lamps operate at relatively cool temperatures such that the interior wall surface of the vitreous envelope is less than 200°C. The operation of such lamps at such low temperatures is disclosed in this patent as resulting in premature blackening of the glass envelope. Such blackening is believed to be from tungsten transfer from the filament onto the inner envelope surface due to failure of the tungsten cycle. This problem is overcome by using a fill in the envelope which includes bromine, phosphorus, carbon and an inert gas, with a phosphorus to carbon mass ratio in the range of approximately 10/1 to 1/1. Phosphine, methyl bromide, dibromomethane, bromoform and cyanogen (C₂N₂) are disclosed as being suitable as components of the lamp fill. This patent also discloses that adding too much phosphine to the fill also results in lamp darkening.

### SUMMARY OF THE INVENTION

According to the present invention, there is provided a tungsten-halogen lamp comprising a light transmissive vitreous envelope enclosing a tungsten filament and at least one molybdenum inlead connected to said filament and containing a fill which comprises a mixture of carbon, hydrogen, inert gas, phosphorus, chlorine and bromine, the mole ratio of the combined total of said chlorine and bromine to said carbon in said lamp being greater than 1/1, characterized in that the mole ratio of said phosphorus to said combined total of chlorine and bromine ranges from 0.5 to 2.

Wall blackening and tungsten filament embrittlement in illustrative tungsten-halogen lamps according to the invention containing molybdenum and tungsten and which operate at relatively elevated temperatures may be substantially reduced.

It is preferred that the inert gas comprise a mixture of nitrogen and noble gas when employed with a lamp that operates at relatively high voltage. In a preferred embodiment the carbon is provided by a hydrocarbon compound containing a single carbon atom, bromine and chlorine. The vitreous envelope may be made of a suitable high temperature type of aluminosilicate glass or quartz. By relatively elevated temperature is meant that the interior surface of the vitreous envelope will be at a temperature of at least about 250°C. In general, the temperature will range from about 250 up to as much as 900°C in the case of a lamp having a quartz envelope and up to about 600°C for a lamp having a glass envelope, with temperatures of from about 350-450°C being typical for lamps with glass envelopes and temperatures up to about 800°C for lamps with quartz envelope. However, the lamps of this invention will also work at temperatures below 250°C.

### BRIEF DESCRIPTION OF THE DRAWING

Figure 1 is a schematic drawing of a tungsten-halogen lamp useful in the practice of the present invention wherein the lamp envelope is made of a high temperature glass.
Figure 2 is a schematic drawing of another embodiment of a tungsten-halogen lamp useful in the practice of the invention wherein the envelope is made of quartz.

### DETAILED DESCRIPTION

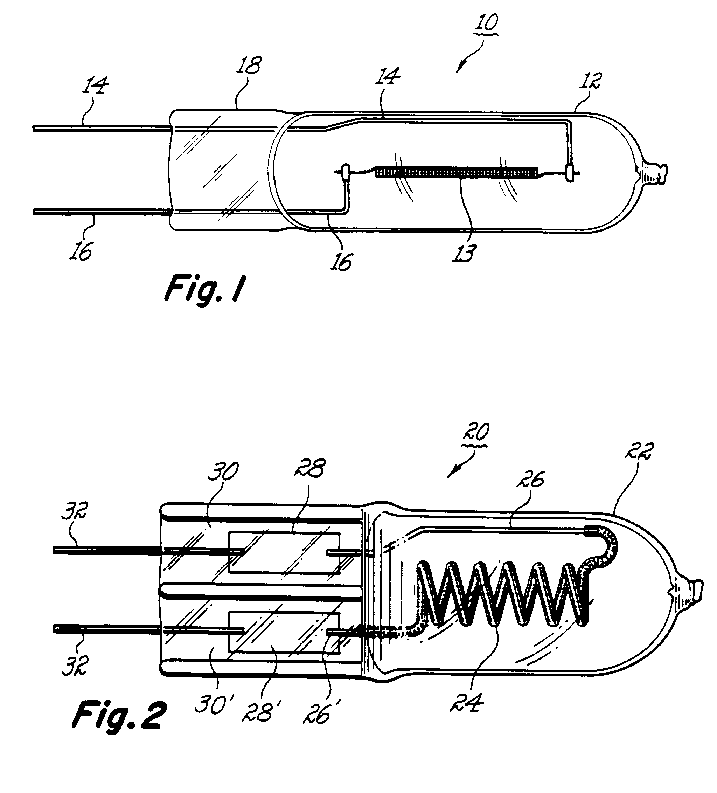

Figures 1 and 2 illustrate two different embodiments of a tungsten-halogen lamp containing a fill in accordance with the present invention. It is understood that these lamps are merely representative of only two of many different varieties and configurations of tungsten-halogen lamps capable of successfully utilizing the fill of the present invention. Accordingly, the scope of the invention is not to be limited to the particular lamps as shown and described herein below.

Referring to Figure 1, lamp 10 has a tubular envelope made of a suitable light transmissive vitreous envelope 12 formed from a high temperature aluminosilicate glass which may be of the type disclosed and claimed in U.S. Patent 4,737,685 the disclosures of which are incorporated herein by reference. A tungsten filament 13 is connected to and supported within said vitreous envelope by inlead wires 14 and 16 made of molybdenum and which extend through a customary pinch seal 18. If desired, molybdenum inleads 14 and 16 can be connected by means of welding, brazing or other suitable means to less costly metals of a greater or the same diameter to provide electrical connection for the filament and support for the lamp. Envelope 12 also contains a fill comprising a mixture of nitrogen, hydrogen, noble gas, phosphorus, chlorine and bromine and carbon.

Figure 2 illustrates another type of tungsten-halogen lamp useful in the practice of this invention wherein molybdenum foil is used to effect a hermetic seal in the pinch seal area, as is the practice with such lamps having quartz envelopes. Thus, lamp 20 comprises quartz envelope 22 containing two pinch-sealed inlead constructions comprising outer terminal leads 32 and 32' and inner terminal leads 26 and 26' connected to opposite ends of intermediate molybdenum sealing foils 28 and 28', respectively. Tungsten filament 24 is attached at one end to inner lead 26 and at the other end to inner lead 26'. The leads are connected to the molybdenum sealing foils by suitable means, such as welding. Leads 26 and 26' are made of molybdenum. Envelope 22 also contains a fill comprising a mixture of carbon, noble gas, hydrogen, phosphorus, chlorine, bromine and optionally, nitrogen.

In both of the embodiments set forth above, the lamp envelope encloses both tungsten and molybdenum which are exposed to the gaseous fill at the high temperatures involved during operation of the lamp. The aluminosilicate glass envelope may be used up to a temperature of about 600°C, whereas the quartz may be used at temperatures as high as about 950°C, but more typically about 800°C. Temperature in this context refers to the inner wall temperature of the glass envelope. However, it should be understood that the present invention will work at temperatures below 250°C. Accordingly, although lamps useful in the practice of this invention are useful up to temperatures of about 600°C for the case of a high temperature glass envelope and up to at least about 800°C and even 950°C in the case of a quartz envelope, the invention is not intended to be restricted to lamps operating at such high temperatures.

As set forth above, it is essential that the fill includes both bromine and chlorine along with phosphorus, hydrogen carbon and inert gas. The source of the bromine or chlorine may be bromine gas, chlorine gas, HBr or HCl, but as a practical matter one or more hydrocarbon compounds containing one or both of these halogens will be used because of the toxicity and corrosivity of Br₂, HBr, Cl₂ and HCl. Illustrative, but non-limiting examples of halogenated hydrocarbon compounds useful in the practice of this invention include CH₃Br, CH₂Br₂, CHBr₃, CH₃Cl, CH₂Cl₂, CHCl₃, CH₂ClBr and CHCl₂Br. One or more of these compounds may be employed along with HCl and/or HBr if desired.

The phosphorus may be added in the form of yellow or red elemental phosphorus or in the form of a phosphorus containing compound. Thus, yellow or red phosphorus may be introduced directly into the interior of the lamp envelope or a suitable phosphorus containing compound such as phosphine PH₃ may be added. Phosphine is particularly preferred because it is a gas at room temperature and pressure and can be accurately mixed and diluted with an inert gas and the mixture introduced into the lamp envelope. In one method of lamp manufacture the phosphine is mixed with inert gas and this mixture, along with the halogenated hydrocarbon is introduced into the interior of the filament enclosing lamp envelope and the lamp is then sealed. In another method of lamp manufacture, it has been found convenient to introduce a mixture of phosphine and inert gas into the lamp and energize the filament to crack the phosphine into phosphorus and hydrogen. The phosphorus coats the interior surface of the lamp envelope as elemental phosphorus. The nitrogen and hydrogen are then removed and the remainder of the fill including inert gas, halogen, carbon and hydrogen are added. The hydrogen and carbon are introduced as one of the constituent atoms of the halogenated hydrocarbon compounds or compound and/or HBr and HCl in this method of manufacture. The presence of hydrogen within the lamp envelope has been found to be necessary in order to stabilize the halogen.

As set forth above, it is essential and critical to the present invention that the lamp fill contain both chlorine and bromine. Tungsten halogen lamps were made employing only the well known methyl bromide CH₃Br, along with PH₃, N₂ and Xe. These lamps exhibited wall blackening or darkening resulting from deposition of the molybdenum on the interior surface of the lamp envelope after less than 1000 hours of lamp operation. That is, lamp lumens were substantially reduced due to deposition of black metallic molybdenum on the interior wall surface of the lamp envelope. This molybdenum metal is transferred onto the inner surface of the lamp envelope from the molybdenum leads supporting the tungsten filament. Increasing the phosphine content in the fill has been found to reduce the molybdenum blackening, but will not reduce it to an acceptable amount before the increased phosphine dose results in tungsten blackening.

Moreover, the use of only methyl bromide for the sole source of halogen in the fill resulted in substantial embrittlement of the tungsten filament and lamps containing only this halogen failed an impact break test after two hours burning time. The filament break test is conducted by inserting a lamp into a weighted fixture at the end of a rod and subjecting same to a pendulum impact test, wherein the angle of elevation of the rod at which the filament breaks when released to swing down to a stop is taken as a measure of the filament embrittlement. Using only methyl bromine for the halogen resulted in lamps breaking at an angle of from 45-60°. In contrast, filaments in the same type of lamp, but which employed a single hydrocarbon compound in the fill which contained both chlorine and bromine according to a preferred embodiment of the invention did not break until an angle of approximately 90° was reached after two hours of burning time.

A mixture of the two compounds methyl bromide CH₃Br and methyl chloride CH₃Cl in the lamp fill prevented substantial blackening from both molybdenum and tungsten at lamp temperatures of about 350-400°C. However, carbon embrittlement of the filament was increased due to the presence of too much carbon in the lamp resulting from the relatively low ratio of halogen to carbon of 1/1. Accordingly, in the practice of the present invention it is preferred that the halogen to carbon mole ratio exceed 1/1 and preferably be at least about 2/1.

The mole ratio of phosphorus to halogen in the lamp fill is also important to the operation of the present invention. The mole ratio of phosphorus to halogen (chlorine plus bromine) will broadly ranges from 0.5-2.0 moles of phosphorus per mole of halogen depending on the type of lamp. That is, most tungsten halogen lamps having quartz envelopes operate at lower voltages (i.e., 12 volts) and higher temperatures than lamps having envelopes made of high temperature glass (i.e., 120 volts). Similarly, the amount of phosphine or phosphorus in the fill will broadly range from about 0.004 to 0.20 mole %, preferably from about 0.02 to 0.12 mole % and more preferably from about .04 to .08 mole % of the total fill. Again, the actual amount will depend on the lamp type.

As set forth above the fill must also contain inert gas. By inert gas is meant one or more noble gases and, in high voltage lamps, a mixture of one or more noble gases with a gas which prevents arcing of the filament. Lamp fills containing only one or more noble gases as the inert gas are satisfactory with relatively low voltage lamps (i.e., 12 V) and lamps in which the filaments are not tightly wound. However, in relatively high voltage lamps (i.e., 120 V) and in lamps in which the filament is tightly wound having relatively small turn-to-turn distances, the voltage drop from turn-to-turn is high and a gas which aids to prevent arcing between filament turns is necessary. Filament arcing and arc-out is well known in the lamp industry and results in one or more sections of the filament opening due to tungsten erosion from the arc, with the result that the lamp becomes inoperative due to the open circuit resulting from the filament burn out. Nitrogen has been found to be an effective gas for use in the present invention to prevent filament arcing. Accordingly, it has been found that, depending on lamp type, the amount of nitrogen in the fill will broadly range from about 0-20 mole % of the total fill, more generally 0.5-10 mole % and preferably from about 3 to 6 mole %. The amount of noble gas in the fill may range from about 80 to 99.8 mole %. Noble gases generally used-in tungsten halogen lamps include xenon, krypton, argon, and even helium, and mixtures thereof. Xenon, krypton and argon are preferred.

Tungsten-halogen lamps made according to the practice of the present invention have exhibited optimum results when both the chlorine and bromine are part of a single carbon atom halogenated hydrocarbon. Two single carbon atom hydrocarbon compounds or methane derivatives containing both chlorine and bromine that have been successfully employed in the practice of the present invention are dichlorobromomethane CHCl₂Br and bromochloromethane CH₂ClBr of which CHCl₂Br is most preferred. Thus, in one embodiment of the present invention the tungsten-halogen lamp will contain a fill which comprises a mixture of phosphine, inert gas, CHCl₂Br and/or CH₂ClBr. In another embodiment the fill will comprise a mixture of P, H₂, inert gas, CHCl₂Br and/or CH₂ClBr with all or a portion of the hydrogen coming from the hydrocarbon. In a preferred embodiment the lamp fill will contain CHCl₂Br. In a particularly preferred embodiment the fill will comprise P, H₂, inert gas and at least one compound selected from the group consisting essentially of CHCl₂Br and CH₂ClBr.

The amount of dichlorobromomethane if employed as the source of halogen will broadly range from about 0.007-0.1 mole % of the total fill. In high voltage lamps the range will be about .007-.025 mole % of the total fill and preferably from .009-.017 mole %. If only chlorobromomethane is used, it will be present in the fill in an amount broadly ranging from about 0.010-0.15 mole % and preferably from about .015 to .030 mole %. It is understood of course that mixtures of these two hydrocarbons can be employed as well as mixtures of these hydrocarbons with other compounds and such as HBr, CH₃Br, CH₂Br₂, CHBr₃, HCl, CH₃Cl, CH₂Cl₂ and CHCl₃. However, it is most particularly preferred that CHCl₂Br, CH₂ClBr and mixtures thereof be used as the sole source of halogen and particularly an embodiment wherein CHCl₂Br contributes a majority of the halogen and more preferably all of the halogen. Thus, it can be seen that in this embodiment that the mole ratio of halogen to carbon is greater than about 2/1 and ranges from at least about 2/1 to about 3/1.

These lamps generally contain a fill at a pressure ranging from about 3 to 10 atmospheres. In one particularly preferred embodiment lamps having glass envelopes have been made containing a fill, on a mole basis, of 0.08% PH₃, 0.013 % CHCl₂Br and 5% N₂, with Xe making up the difference. CH₂ClBr has been successfully used in a similar lamp and fill in an amount of 0.025 mole %.

## Claims

1. A tungsten-halogen lamp (10,20) comprising a light transmissive vitreous envelope (12,22) enclosing a tungsten filament (13,24) and at least one molybdenum inlead (14,16,26,26') connected to said filament (13,24) ) and containing a fill which comprises a mixture of carbon, hydrogen, inert gas, phosphorus, chlorine and bromine, the mole ratio of the combined total of said chlorine and bromine to said carbon in said lamp being greater than 1/1, characterized in that the mole ratio of said phosphorus to said combined total of chlorine and bromine ranges from 0.5 to 2.

2. The lamp of claim 1, wherein said inert gas comprises a noble gas.

3. The lamp of claim 2, wherein said noble gas is selected from the group consisting essentially of xenon, argon, krypton, helium and mixture thereof.

4. The lamp of claim 3, wherein said inert gas comprises a mixture of nitrogen and said noble gas.

5. The lamp of claim 3, wherein said noble gas is selected from the group consisting essentially of xenon, argon, krypton, and mixture thereof.

6. The lamp of claim 1, wherein the amount of said phosphorus in said fill ranges from 0.004 to 0.20 mole percent.

7. The lamp of claim 6, wherein said carbon comprises a single carbon atom hydrocarbon compound.

8. The lamp of claim 7, additionally containing nitrogen.

9. The lamp of claim 4 or 8, wherein said nitrogen is present in an amount no greater than about 20 mole percent.

10. The lamp of any one of claims 1 to 9, wherein the envelope (12,22) is an hermetically sealed, high temperature glass envelope, or a quartz envelope.

11. The lamp of claim 10, wherein said carbon, chlorine, and bromine are derived from a single carbon atom hydrocarbon which contains said carbon and both said chlorine and bromine.

12. The lamp of claim 11, wherein said hydrocarbon is selected from the group consisting of CHCl₂Br, CH₂ClBr and mixture thereof.

## Patentansprüche

1. Wolfram-Halogen-Lampe (10,20), umfassend einen lichtdurchlässigen Glaskolben (12,22), der einen Wolfram-Glühfaden (13,24) und mindestens eine Molybdän-Zuleitung (14,16,26'), die mit dem Glühfaden (13,24 ) verbunden ist, einschließt, und der eine Füllung enthält, die eine Mischung von Kohlenstoff, Wasserstoff, Inertgas, Phosphor, Chlor und Brom umfaßt, wobei das Molverhältnis der kombinierten Gesamtmenge des Chlors und Broms zum Kohlenstoff in der Lampe größer als 1/1 ist, dadurch gekennzeichnet, daß das Molverhältnis des Phosphors zur kombinierten Gesamtmenge von Chlor und Brom im Bereich von 0,5 bis 2 liegt.

2. Lampe nach Anspruch 1, worin das Inertgas ein Edelgas umfaßt.

3. Lampe nach Anspruch 2, worin das Edelgas ausgewählt ist aus der Gruppe bestehend im wesentlichen aus Xenon, Argon, Krypton, Helium und einer Mischung davon.

4. Lampe nach Anspruch 3, worin das Inertgas eine Mischung von Stickstoff und dem Edelgas umfaßt.

5. Lampe nach Anspruch 3, worin das Edelgas ausgewählt ist aus der Gruppe bestehend im wesentlichen aus Xenon, Argon, Krypton und einer Mischung davon.

6. Lampe nach Anspruch 1, worin die Menge des Phosphors in der Füllung im Bereich von 0,004 bis 0,20 Mol-% liegt.

7. Lampe nach Anspruch 6, worin der Kohlenstoff eine Kohlenwasserstoff-Verbindung mit einem einzigen Kohlenstoffatom umfaßt.

8. Lampe nach Anspruch 7, die zusätzlich Stickstoff enthält.

9. Lampe nach Anspruch 4 oder 8, worin der Stickstoff in einer Menge von nicht mehr als 20 Mol-% vorhanden ist.

10. Lampe nach einem der Ansprüche 1 bis 9, worin der Kolben (12,22) ein hermetisch abgedichteter, aus einem Hochtemperaturglas bestehender Kolben oder ein Quarz-Kolben ist.

11. Lampe nach Anspruch 10, worin der Kohlenstoff, das Chlor und das Brom von einem Kohlenwasserstoff mit einem einzigen Kohlenstoffatom abgeleitet sind, der den Kohlenstoff und sowohl das Chlor als auch das Brom enthält.

12. Lampe nach Anspruch 11, worin der Kohlenwasserstoff ausgewählt ist aus der Gruppe bestehend aus CHCl₂Br, CH₂ClBr und einer Mischung davon.

## Revendications

1. Lampe halogène à filament de tungstène (10, 20) comprenant une enveloppe vitreuse transmettant la lumière (12, 22) à l'intérieur de laquelle il y a un filament de tungstène (13, 24) et au moins un conducteur intérieur en molybdène (14, 16, 26, 26') relié audit filament (13, 24) et contenant une masse de remplissage qui comprend un mélange de carbone, hydrogène, gaz inerte, phosphore, chlore, et brome, le rapport molaire du total combiné desdits atomes de chlore et de brome auxdits atomes de carbone dans ladite lampe étant supérieur à 1/1, caractérisée en ce que le rapport molaire desdits atomes de phosphore au total combiné desdits atomes de chlore et de brome se situe dans l'intervalle allant de 0,5 à 2.

2. Lampe conforme à la revendication 1, dans laquelle ledit gaz inerte comprend un gaz noble.

3. Lampe conforme à la revendication 2, dans laquelle ledit gaz noble est choisi dans l'ensemble constitué essentiellement par le xénon, l'argon, le krypton, l'hélium, et mélange de ces derniers.

4. Lampe conforme à la revendication 3, dans laquelle ledit gaz inerte comprend un mélange d'azote et dudit gaz noble.

5. Lampe conforme à la revendication 3, dans laquelle ledit gaz noble est choisi dans l'ensemble constitué par le xénon, l'argon, le krypton, et mélange ces derniers.

6. Lampe conforme à la revendication 1, dans laquelle la quantité desdits atomes de phosphore dans ladite masse de remplissage est comprise entre 0,004 et 0,20 % en moles.

7. Lampe conforme à la revendication 6, dans laquelle ledit carbone provient d'un composé hydrocarboné comportant un seul atome de carbone.

8. Lampe conforme à la revendication 7, contenant en outre de l'azote.

9. Lampe conforme à la revendication 4 ou 8, dans laquelle ledit azote est présent en une quantité qui n'est pas supérieure à 20 % en moles.

10. Lampe conforme à l'une quelconque des revendications 1 à 9, dans laquelle l'enveloppe (12, 22) est une enveloppe en verre hermétiquement scellée, fonctionnant à des températures élevées ou une enveloppe en quartz.

11. Lampe conforme à la revendication 10, dans laquelle lesdits atomes de carbone, chlore et brome proviennent d'un hydrocarbure comportant un seul atome de carbone et contenant ledit atome de carbone et l'ensemble desdits atomes de chlore et de brome.

12. Lampe conforme à la revendication 11, dans laquelle ledit hydrocarbure est choisi dans l'ensemble formé par CHCl₂Br, CH₂ClBr et mélange de ces derniers.
